# FASCICULE DE BREVET EUROPEEN

(11) **EP 3 155 201 B1**
(45) Date de publication et mention de la délivrance du brevet: **26.09.2018**
(21) Numéro de dépôt: 15723944.3
(22) Date de dépôt: 20.05.2015
(51) Int. Cl.: E21B 10/55, E21B 10/56, E21B 10/54, B23K 1/00, B23K 26/34, C22C 29/02, B23K 101/00, B23K 103/00, E21B 10/26, E21B 17/10

(54) **STABILISATEUR-ALÉSEUR POUR TRAIN DE FORAGE**
STABILISATOR-RÄUMER FÜR BOHRGESTÄNGE
STABILIZER-REAMER FOR DRILL STRING

(30) Priorité: 30.05.2014 BE 201400411
(43) Date de publication de la demande: 19.04.2017
(73) Titulaire: Diarotech S.A., 6060 Gilly (BE); Aurora Bit Consultancy Ltd, Aberdeen AB14 4UQ (GB)
(72) Inventeur: DELWICHE, Robert, B-1180 Uccle (BE); OORT, Harrie, Laurencekirk AB30 1TS (GB); BIGGS, Nicholas, Aberdeen AB15 5EJ (GB); LAMINE, Etienne, B-1490 Court-Saint-Etienne (BE)
(74) Mandataire: Office Kirkpatrick
(86) Numéro de dépôt international: PCT/EP2015/061069
(87) Numéro de publication internationale: WO 2015/181010

(56) Documents cités:
- WO-A1-2004/029402
- WO-A1-2010/056373
- GB-A- 2 377 722
- GB-A- 2 468 781
- US-B1- 8 607 900

## Description

### Domaine de l'invention

La présente invention concerne des dispositifs de forage et plus particulièrement, un stabilisateur-aléseur pour matériel de fond de trou.

### Description de l'état de la technique

Le document US 43 855 669 divulgue un outil doté de capacités d'alésage et de stabilisation. La partie stabilisateur de l'outil limite le mouvement latéral du trépan au fur et à mesure qu'il avance à travers la formation rocheuse, la partie aléseur se caractérisant par la présence de pastilles durcies qui exercent une action de coupe sur la paroi du trou. Les pastilles en saillie permettent au stabilisateur-aléseur de maintenir à la dimension voulue toutes les parties de la paroi du trou qui sont de dimension inférieure à la norme. Dans ce document, les pastilles durcies divulguées sont des pastilles en carbure de tungstène ou des pastilles en PDC (de l'anglais « poly-diamond compact » ou diamant polycristallin compact). Les pastilles en carbure de tungstène suffisent dans des conditions normales de forage non abrasif, mais ce type de protection ne répond plus aux besoins des applications actuelles, qui visent des sections plus profondes et plus difficiles à travers ou dans des roches abrasives. Le rechargement dur au carbure de tungstène conduit à une dynamique de fond de trou incontrôlable avec des vibrations latérales, en torsion et axiales, et des résultats peu économiques, obligeant l'exploitant à s'extraire du puits pour remplacer des composants défaillants ou usés de l'ensemble de fond de trou. D'un autre côté, l'introduction de pastilles en PDC agissant comme des noeuds de coupe provoque des chocs et des variations du couple de torsion qui conduisent à conférer une dynamique inefficace au matériel de fond de trou.

Le document US 8 607 900 décrit un outil de fond de trou doté de fonctionnalités d'alésage et de stabilisation. Il divulgue des noeuds de coupe en PDC situés sur les bords des lames hélicoïdales. Comme expliqué précédemment, bien qu'ils améliorent le pouvoir de coupe des outils, ces noeuds de coupe en PDC provoquent des chocs et des variations du couple de torsion qui conduisent à conférer une dynamique inefficace au matériel de fond de trou.

Le document EP 1 811 126 divulgue également un outil présentant des capacités d'alésage et de stabilisation. Il fait état d'inserts en carbure qui améliorent les capacités d'alésage de l'outil. Les inconvénients liés à cette caractéristique sont ceux qui ont été évoqués précédemment dans le cas plus particulier des inserts en carbure de tungstène.

Le document WO 2004/029 402 divulgue, là encore, un aléseur-stabilisateur comportant des inserts en carbure ou des taillants en PDC et qui présente donc les mêmes inconvénients que les outils divulgués dans les autres documents de l'état de la technique.

Il apparaît également qu'avec les dispositifs de l'état de la technique, environ 90% de la puissance transmise à l'ensemble de fond de trou est perdue dans les vibrations du train de forage. Ces vibrations peuvent être axiales (phénomène de « bit bounce » ou rebond de l'outil), en torsion (phénomène de « stick/slip » ou adhérence-glissement) ou latérales (flambages) et proviennent de sources d'excitation potentielles extrêmement variées : déséquilibre des masses, désalignement et plis ou coudes, action de coupe du trépan, lames du stabilisateur, moteurs à boue et coefficient de frottement entre le train de forage et la paroi du trou de forage.

### Résumé de l'invention

L'invention a pour objet de fournir un stabilisateur-aléseur qui palie les inconvénients susmentionnés des dispositifs de l'état de la technique.

Pour ce faire, est proposée un stabilisateur-aléseur pour train de forage comprenant sur sa surface externe un mélange d'inserts, le mélange comprenant des inserts de coupe et des inserts résistants à l'usure, caractérisé en ce que- lesdits inserts de coupe et résistants à l'usure sont diamantés,- les inserts diamantés résistants à l'usure ont une granulométrie du diamant inférieure et une concentration en diamant supérieure à celles des inserts diamantés de coupe.

Par « mélange d'inserts diamantés » on entend un ensemble d'inserts diamantés comprenant au moins deux types d'inserts diamantés, lesdits types se caractérisant par des granulométries du diamant et/ou des concentrations en diamant différentes, et éventuellement par d'autres paramètres différents comme la composition de la matrice imprégnée qui compose les inserts. Les expressions « inserts diamantés de coupe » et « inserts diamantés résistants à l'usure » employées tout au long du présent texte visent à établir une distinction entre les deux types ou plus d'inserts diamantés compris dans l'ensemble d'inserts diamantés.

Il apparaît en effet que les inserts diamantés ayant une granulométrie du diamant grossière et une concentration en diamant moyenne constituent des structures de coupe efficaces, engendrant moins de variations du couple de torsion dans le train de forage que les inserts de coupe en PDC de l'état de la technique, et qu'ils procurent de ce fait une durée de vie nettement supérieure au matériel de forage. D'un autre côté, les inserts diamantés ayant une faible granulométrie du diamant et une forte concentration en diamant présentent un faible coefficient de frottement avec la roche du puits de forage et confèrent donc une grande résistance à l'usure au stabilisateur-aléseur. Il apparaît que les stabilisateurs-aléseurs comprenant un mélange des deux types d'inserts diamantés offrent des capacités de stabilisation et d'alésage nettement supérieures à celles des stabilisateur-aléseurs de l'état de la technique.

Dans un mode de réalisation avantageux de l'invention, les inserts diamantés de coupe ont une granulométrie du diamant comprise entre 18/20 et 40/50 mesh ASTM et une concentration en diamant comprise entre 10% et 35% en volume, et les inserts diamantés résistants à l'usure ont une granulométrie du diamant comprise entre 40/50 et 120/140 mesh ASTM et une concentration en diamant comprise entre 35% et 60% en volume.

Il est apparu que ces concentrations en diamant et ces granulométries de diamant des inserts de coupe permettaient un micro-cisaillement efficace adapté à l'alésage de la paroi du trou de forage, et que les concentrations en diamant et granulométries de diamant susmentionnées des inserts résistants à l'usure procuraient, elles, un faible coefficient de frottement à ces inserts et par conséquent, une protection efficace contre l'abrasion exercée par la paroi du trou de forage. En conséquence, une combinaison des deux types d'inserts confère des capacités d'alésage en même temps que de résistance à l'usure au stabilisateur-aléseur selon l'invention.

Dans un mode de réalisation avantageux, la composition des inserts diamantés comprend au moins un métal et un carbure métallique choisi dans le groupe constitué du carbure de tungstène, du carbure de titane, du carbure de tantale, du carbure de chrome, du carbure de vanadium, carbure de niobium et du carbure de molybdène. L'au moins un métal et le métal du carbure métallique ne sont pas les mêmes. Avantageusement, l'au moins un métal est choisi dans le groupe constitué du cobalt, du nickel, du molybdène, du chrome, du manganèse et du fer. De préférence, l'au moins un métal est le cobalt ou le nickel, ces métaux procurant en effet une bonne résistance mécanique de la phase métallique.

Dans un mode de réalisation avantageux, les inserts diamantés comprennent entre 50% et 95% de carbure métallique.

Il est apparu que cette plage procurait la meilleure résistance à l'usure possible des inserts diamantés. En dessous de cette plage, les observations montrent que l'usure augmente très nettement. Au-dessus de 95%, les inserts deviennent trop fragiles. Il est important de noter que tout en augmentant la concentration du diamant dans les inserts imprégnés, on diminue avantageusement la proportion de carbure afin d'avoir une matrice plus résiliente. La proportion de carbure est donc généralement plus faible dans les inserts diamantés résistants à l'usure que dans les inserts imprégnés de coupe.

Dans un mode de réalisation avantageux de l'invention, les inserts diamantés sont brasés sur le stabilisateur-aléseur.

Le brasage se révèle être un procédé très efficace pour préserver l'intégrité des inserts diamantés, notamment des inserts diamantés ayant une forte concentration en diamant.

Dans un mode de réalisation particulièrement avantageux de l'invention, les inserts diamantés sont brasés à une température inférieure à 850°C.

Les propriétés structurelles des inserts diamantés brasés sont effectivement mieux préservées en dessous de cette température, car les observations montrent qu'au-dessus de 850°C, le diamant commence à être catalysé par la plus grande partie des métaux utilisés dans la composition des inserts diamantés et se transforme alors en graphite.

Dans un mode de réalisation avantageux de l'invention, le stabilisateur-aléseur comprend une partie cylindrique centrale et deux parties coniques de part et d'autre de ladite partie cylindrique centrale. La partie cylindrique centrale comprend des lames avantageusement hélicoïdales.

Cette conception limite le niveau de choc du stabilisateur en rotation, tout en laissant un canal permettant de faire circuler le fluide dans le puits de forage.

Dans un mode de réalisation avantageux de l'invention, la partie cylindrique centrale comprend un mélange d'inserts diamantés comprenant des inserts diamantés de coupe et des inserts diamantés résistants à l'usure. La proportion d'inserts diamantés de coupe dans ce mélange d'inserts diamantés sur la partie cylindrique centrale est avantageusement comprise entre 0% et 70%. Il s'avère qu'une proportion supérieure à 70%, bien qu'elle confère un très grand pouvoir d'alésage au stabilisateur, crée un coefficient de frottement trop élevé entre le stabilisateur et la paroi du trou de forage.

Avantageusement, les bords d'attaque et latéral des lames hélicoïdales comprennent entre une et cinq rangées d'inserts diamantés de coupe et la partie centrale des lames hélicoïdales comprend un mélange d'inserts diamantés de coupe et d'inserts diamantés résistants à l'usure.

Dans une conception telle, les inserts de coupe situés sur les bords d'attaque et latéral des lames hélicoïdales améliorent la qualité du puits de forage en alésant efficacement la paroi du trou de forage.

Dans un mode de réalisation avantageux, une fraction comprise entre 40% et 70% de la surface des lames hélicoïdales est recouverte des inserts diamantés.

Dans un mode de réalisation avantageux, le diamètre des inserts diamantés est compris entre 6 et 25 mm et leur hauteur est comprise entre 3 et 30 mm.

Dans un mode de réalisation avantageux de l'invention, les deux parties coniques comprennent un mélange d'inserts diamantés, le mélange comprenant des inserts diamantés de coupe et des inserts diamantés résistants à l'usure.

Cette conception des parties coniques rend celles-ci particulièrement adaptées à l'alésage avant et à l'alésage arrière pendant le forage.

Avantageusement, la proportion des inserts de coupe dans les deux parties coniques est supérieure à 50% du nombre total d'inserts dans le mélange d'inserts diamantés.

Il est apparu que de telles proportions conféraient des capacités d'alésage avant et d'alésage arrière efficaces au stabilisateur-aléseur selon l'invention.

Dans un mode de réalisation avantageux, le stabilisateur-aléseur comprend des zones de transition cylindriques entre les lames hélicoïdales et les parties coniques, lesdites zones de transition cylindriques comprenant entre deux et cinq rangées d'inserts diamantés de coupe.

Les inserts de coupe prévus dans ces régions augmentent la durée de vie de l'outil, les observations ayant en effet montré que les zones de transition entre les lames et les parties coniques étaient des régions des outils qui sont fortement exposées aux chocs destructeurs et aux formations extrêmement abrasives provenant de la paroi du trou de forage.

Dans un mode de réalisation avantageux, les parties coniques du stabilisateur-aléseur selon l'invention comprennent des inserts diamantés ayant une forme, un diamètre et une longueur adaptés pour former un angle de conicité entre 5° et 25°. Le mélange d'inserts diamantés comprend des inserts avantageusement cylindriques dotés d'une surface supérieure plane et des inserts arrondis de courbure variable.

Cet angle de conicité et cette conception des inserts améliorent l'efficacité d'alésage du stabilisateur-aléseur en augmentant la surface de contact entre les zones d'alésage arrière et d'alésage avant et la paroi du trou de forage.

Dans un autre mode de réalisation avantageux, la partie cylindrique centrale du stabilisateur-aléseur comprend un revêtement laser à diamant, la concentration en diamant dudit revêtement laser à diamant étant comprise entre 20 et 35% en volume, et la granulométrie du diamant étant comprise entre 40/50 mesh ASTM et 120/140 mesh ASTM. Le revêtement laser à diamant peut être appliqué sur toute la surface, ou sur une partie de la surface, avec des couches d'acier intercalées.

Le revêtement laser à diamant offre une alternative intéressante, d'un point de vue économique, au brasage d'inserts diamantés.

L'invention a pour autre objet de fournir un procédé permettant d'améliorer encore les capacités de stabilisation d'un stabilisateur-aléseur pour un puits d'alésage donné.

Les études montrent que pour réduire les vibrations involontaires du train de forage, le coefficient de frottement global optimal entre le stabilisateur-aléseur et la roche du puits de forage varie d'une application à une autre. En effet, il apparaît que certaines applications nécessitent un coefficient de frottement global plus élevé que d'autres pour réduire de manière optimale les vibrations du train de forage. Les observations montrent qu'un coefficient de frottement global plus élevé est par exemple plus adapté à des puits de forage verticaux ou légèrement inclinés, alors qu'un coefficient moins élevé sera plus adapté à des puits de forages déviés ou horizontaux.

Dans cette optique, le procédé d'amélioration des capacités de stabilisation d'un stabilisateur-aléseur selon l'invention est caractérisé en ce qu'on module le coefficient de frottement entre le stabilisateur-aléseur et la paroi du trou de forage.

Cette modulation signifie que le coefficient de frottement global entre le stabilisateur-aléseur et la paroi du trou de forage est adapté pour atteindre une valeur comprise entre 0,02 et 0,8.

Dans un mode de réalisation avantageux, moduler le coefficient de frottement entre le stabilisateur-aléseur et la paroi du trou de forage consiste à faire varier la proportion d'inserts diamantés de coupe et d'inserts diamantés résistants à l'usure dans le mélange d'inserts diamantés.

Dans un mode de réalisation avantageux, moduler le coefficient de frottement entre un stabilisateur-aléseur selon l'invention et la paroi du trou de forage consiste à faire varier la proportion d'inserts diamantés de coupe et d'inserts diamantés résistants à l'usure dans le mélange d'inserts diamantés sur la partie centrale des lames hélicoïdales du stabilisateur-aléseur.

Le coefficient de frottement global entre le stabilisateur et le puits de forage varie en effet lorsque la proportion d'inserts diamantés ayant un coefficient de frottement supérieur augmente ou diminue dans le mélange d'inserts diamantés. En règle générale, l'augmentation de la proportion d'inserts diamantés de coupe fait augmenter la valeur du coefficient de frottement entre le stabilisateur-aléseur et le trou de forage. La valeur du coefficient de frottement étant le résultat d'une interaction entre le matériau du stabilisateur et le trou de forage, elle dépend également de paramètres liés à la roche qui constitue le trou de forage. Il convient donc de prendre en compte ces paramètres intrinsèques au trou de forage pour faire varier la proportion des différents types d'inserts diamantés. Le coefficient de frottement modulé conformément au procédé selon l'invention peut généralement être réglé entre 0,02 et 0,8.

Dans un mode de réalisation de l'invention, le coefficient de frottement d'un stabilisateur-aléseur est modulé entre 0,3 et 0,6 lorsque le stabilisateur est utilisé pour forer un puits qui est sensiblement vertical.

Par « sensiblement vertical » on entend une inclinaison entre 90° et 70° par rapport à l'horizontale.

Dans un autre mode de réalisation de l'invention, le coefficient de frottement d'un stabilisateur-aléseur est modulé entre 0,02 et 0,3 lorsque le stabilisateur est utilisé dans des puits de forage sensiblement horizontaux ou déviés.

Par « sensiblement horizontaux ou déviés » on entend une inclinaison entre 0° et 70° par rapport à l'horizontale.

Dans un autre mode de réalisation de l'invention, le coefficient de frottement d'un stabilisateur-aléseur est modulé entre 0,3 et 0,6 lorsque le stabilisateur se trouve dans une position proche du trépan ou sur celui-ci dans le train de forage.

Les observations ont effectivement montré qu'un coefficient de frottement plus élevé était préférable pour un stabilisateur se trouvant dans une position proche du trépan ou juste au-dessus de celui-ci dans le train de forage, afin de limiter les effets dynamiques destructeurs conférés à l'ensemble de fond de trou.

Globalement, la proportion des inserts de coupe par rapport aux inserts résistants à l'usure dans la partie cylindrique des lames se situe autour de 25% de la quantité totale d'inserts dans le mélange d'inserts diamantés.

Dans un mode de réalisation avantageux, la proportion d'inserts diamantés de coupe dans le mélange d'inserts diamantés sur la partie centrale des lames hélicoïdales du stabilisateur-aléseur varie entre 0% et 70% du nombre total d'inserts diamantés dans ledit mélange d'inserts diamantés.

Dans certains modes de réalisation, lorsque les exigences en matière de forage dirigé sont élevées, la proportion peut d'ailleurs descendre jusqu'à 5 à 10%, et elle peut même atteindre 0% si le forage doit être horizontal.

Dans certains autres modes de réalisation, lorsque des effets dynamiques importants s'exercent sur le trépan, cette proportion peut monter jusqu'à 70%.

Comme cela a déjà été évoqué, il apparaît qu'une proportion supérieure à 70%, bien qu'elle confère un très grand pouvoir d'alésage au stabilisateur, crée un coefficient de frottement trop élevé entre le stabilisateur et la paroi du trou de forage.

### Brève description des dessins

Les aspects précités de l'invention, et d'autres encore, vont à présent être expliqués de manière plus détaillée, à titre d'exemple et à la lumière des dessins annexés, sur lesquels :
La figure 1 montre un premier mode de réalisation du stabilisateur-aléseur selon l'invention ;
Les figures 2 et 3 montrent de manière plus détaillée des modes de réalisation de la jonction entre les parties coniques et la partie cylindrique d'un stabilisateur-aléseur selon l'invention ;
La figure 4 montre différents modes de réalisation des formes des inserts diamantés selon l'invention ;
La figure 5 montre un autre mode de réalisation d'un stabilisateur-aléseur selon l'invention ;
La figure 6 montre une vue en coupe du mode de réalisation de la figure 5 ;
La figure 7 montre un autre mode de réalisation d'un stabilisateur-aléseur selon l'invention ;
La figure 8 et la figure 9 montrent d'autres modes de réalisation du stabilisateur-aléseur selon l'invention.

Les figures n'ont pas été dessinées à l'échelle. De manière générale, des composants identiques sont désignés par les mêmes repères numériques sur les figures.

### Description détaillée des modes de réalisation préférés

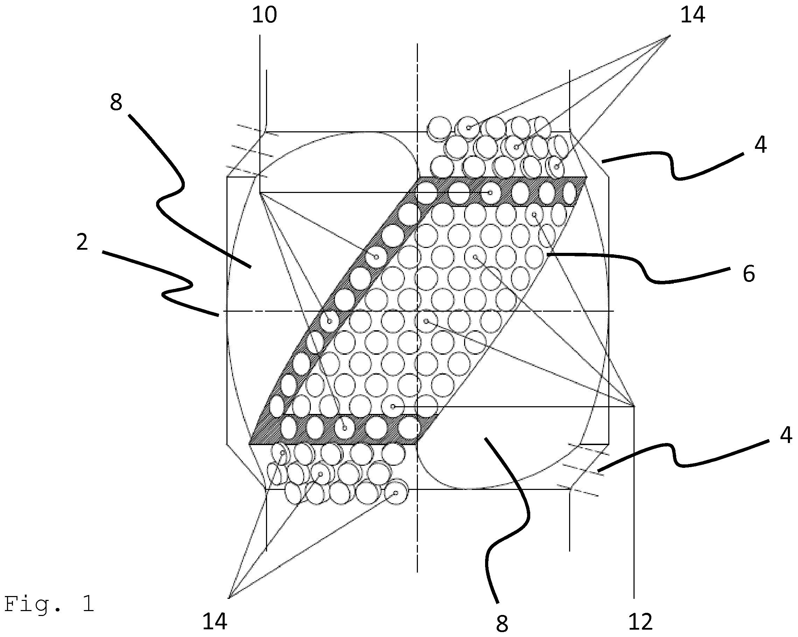

La figure 1 montre un premier mode de réalisation d'un stabilisateur-aléseur selon l'invention. Ce stabilisateur-aléseur comprend une partie cylindrique centrale 2 et deux parties coniques 4 de part et d'autre de ladite partie cylindrique centrale. La partie cylindrique centrale 2 comprend des lames hélicoïdales 6 et des profils à cannelures 8 placés entre les lames hélicoïdales. La partie cylindrique centrale 2 comprend également des inserts diamantés plats ou légèrement arrondis. Les bords d'attaque et latéral des lames hélicoïdales 6 comprennent des inserts diamantés de coupe 10, la partie centrale des lames comprenant quant à elle au moins un type d'inserts résistants à l'usure 12. Les deux parties coniques comprennent un mélange d'inserts diamantés 14, le mélange comprenant des inserts diamantés de coupe et des inserts diamantés résistants à l'usure. La conception des parties coniques rend celles-ci adaptées aux opérations d'alésage avant et d'alésage arrière.

Tous les inserts diamantés de coupe ont une granulométrie du diamant comprise entre 18/20 et 40/50 mesh ASTM et une concentration en diamant comprise entre 10% et 35% en volume, alors que les inserts diamantés résistants à l'usure ont une granulométrie du diamant comprise entre 40/50 et 120/140 mesh ASTM et une concentration en diamant comprise entre 35% et 60% en volume. Le diamètre des inserts diamantés est généralement compris entre 6 et 25 mm et leur hauteur est généralement comprise entre 3 et 30 mm.

Les compositions types de la matrice des inserts diamantés sont les suivantes :

| | |
|---|---|
| 1 | carbure de tungstène : de 50 à 94% |
| | cobalt : de 50 à 6% |
| 2 | carbure de tungstène : de 40 à 96% |
| | cobalt : de 20 à 2% |
| | nickel : de 30 à 4% |
| 3 | carbure de tungstène : de 50 à 94% |
| | 50 à 6% de nickel |
| 4 | carbure de tungstène : de 40 à 60% |
| | carbure de titane : de 10 à 50% |
| | cobalt ou nickel : de 50 à 10% |
| 5 | carbure de chrome : de 50 à 94% |
| | nickel : de 50 à 6% |
| 6 | carbure de titane : de 20 à 40% |
| | carbure de niobium : de 3 à 10% |
| | nickel : de 30 à 50% |
| | molybdène : de 10 à 20% |
| | aluminium : de 10 à 20% |

La composition type des inserts de coupe est la suivante :
carbure de tungstène/nickel, avec un rapport en poids de 85/15%, une concentration de 25% en volume de diamant, la granulométrie du diamant étant de 30/40 mesh ASTM.

Les compositions types des inserts résistants à l'usure sont les suivantes :
1) carbure de tungstène/cobalt avec un rapport en poids de 75/25%, une concentration de 40% en volume de diamant, la granulométrie du diamant étant de 40/50 mesh ASTM.
2) Carbure de tungstène/cobalt avec un rapport en poids de 50/50%, concentration de 60% en volume de diamant, la granulométrie du diamant étant de 70/80 mesh ASTM.

Ces trois types d'inserts peuvent généralement se trouver sur un seul stabilisateur-aléseur selon l'invention. Un stabilisateur selon l'invention comprend en effet au moins un type d'inserts de coupe et un type d'inserts résistants à l'usure, mais il peut également comprendre plus de deux types d'inserts différents. Il peut comprendre, par exemple, deux types d'inserts résistants à l'usure ayant les compositions types susmentionnées.

Il est important de noter que tout en augmentant la concentration du diamant dans les inserts imprégnés, on diminue avantageusement la proportion de carbure afin d'avoir une matrice plus résiliente. La proportion de carbure est donc généralement plus faible dans les inserts diamantés résistants à l'usure que dans les inserts imprégnés de coupe.

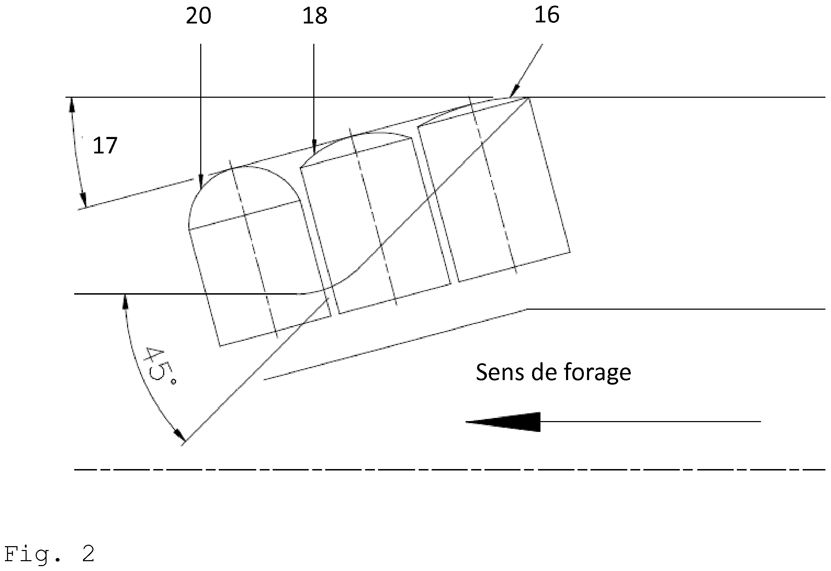

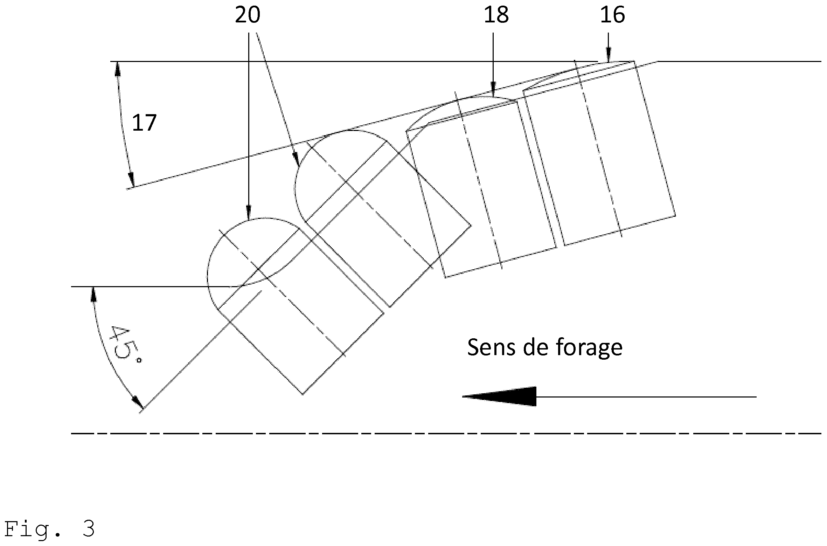

Les figures 2 et 3 montrent de manière plus détaillée des modes de réalisation de la jonction entre les parties coniques et la partie cylindrique d'un stabilisateur-aléseur selon l'invention. Comme le montre le dessin, les parties coniques du stabilisateur-aléseur selon l'invention comprennent des inserts diamantés ayant une forme, un diamètre et une longueur adaptés pour former un angle de conicité 17 qui est compris entre 5° et 25°. Cet angle relativement doux par rapport à ce qui divulgué dans l'état de la technique, s'est révélé être particulièrement adapté aux fonctionnalités d'alésage arrière et d'alésage avant, en augmentant la surface de contact entre les zones d'alésage arrière et d'alésage avant et la paroi du trou de forage. Les inserts diamantés comprennent des inserts arrondis 16, 18 et 20 de courbure variable.

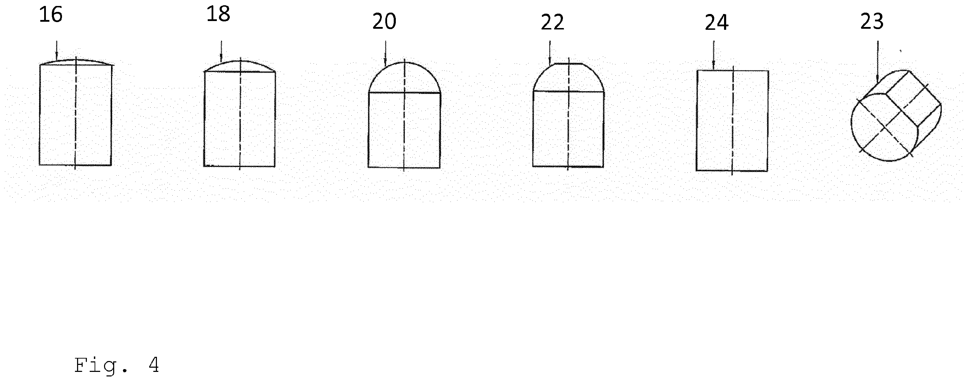

La figure 4 montre différents modes de réalisation des formes des inserts diamantés selon l'invention, ces inserts 16, 18, 20 étant utilisés en combinaison, comme le détaillent les figures précédentes. Les inserts 20 sont des inserts totalement arrondis, alors que les inserts arrondis les moins incurvés 16 peuvent avoir un rayon de courbure d'environ 160 mm. Des inserts tronqués 22 sont également divulgués sur cette figure, ces inserts étant arrondis avec une surface supérieure plane. Des inserts cylindriques 24 dotés d'une surface supérieure plane et des inserts cylindriques tronqués longitudinalement 23, utilisés dans différents modes de réalisation de l'invention sont également représentés sur la figure 4.

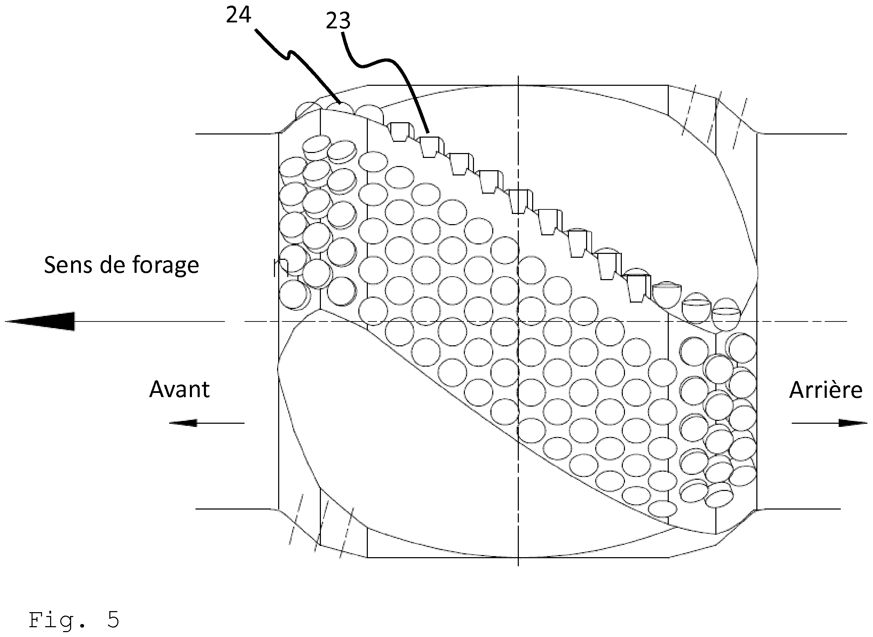

La figure 5 montre un autre mode de réalisation d'un stabilisateur-aléseur selon l'invention, ce mode de réalisation étant particulièrement adapté lorsque la formation du puits est ultra-dure et abrasive. Ce stabilisateur-aléseur comprend des inserts tronqués longitudinalement 23 dans les bords latéraux des lames hélicoïdales et des inserts cylindriques 24 dans les parties coniques. Les inserts diamantés peuvent être des inserts de coupe ou des inserts résistants à l'usure, ou un mélange des deux.

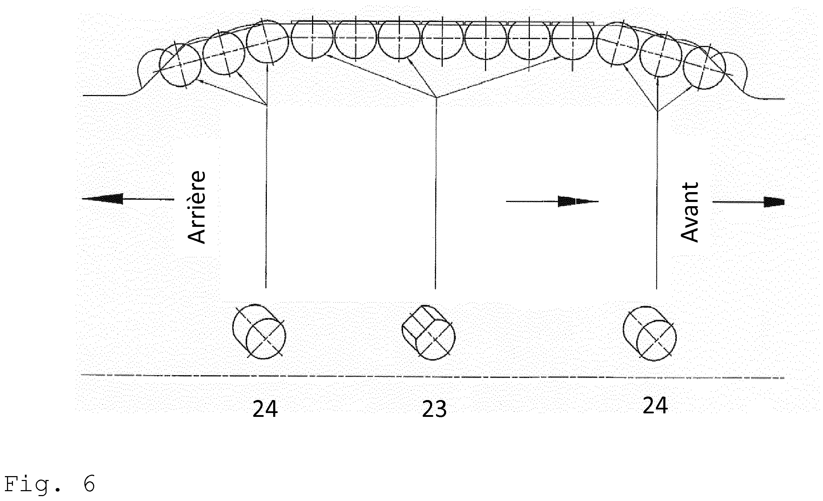

La figure 6 montre une vue en coupe du bord latéral du mode de réalisation de la figure 5.

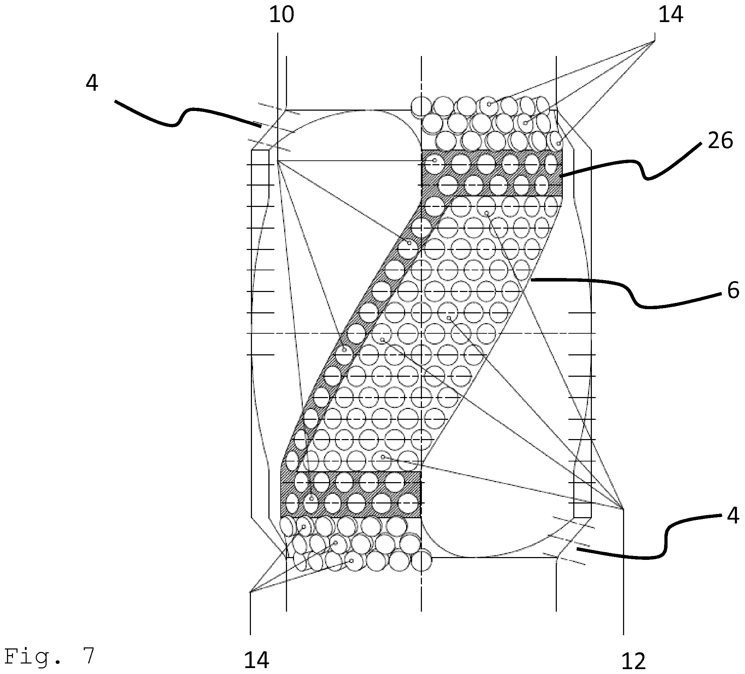

La figure 7 montre un autre mode de réalisation d'un stabilisateur-aléseur selon l'invention. Par rapport au mode de réalisation de la figure 1, ce stabilisateur-aléseur comporte des zones de transition cylindriques 26 entre les lames hélicoïdales 6 et les parties coniques 4, lesdites zones de transition cylindriques 26 comprenant deux rangées d'inserts diamantés de coupe. Les inserts de coupe prévus dans ces régions augmentent la durée de vie de l'outil, les zones de transition entre les lames et les parties coniques étant des régions des outils fortement exposées aux chocs destructeurs avec la paroi du trou de forage.

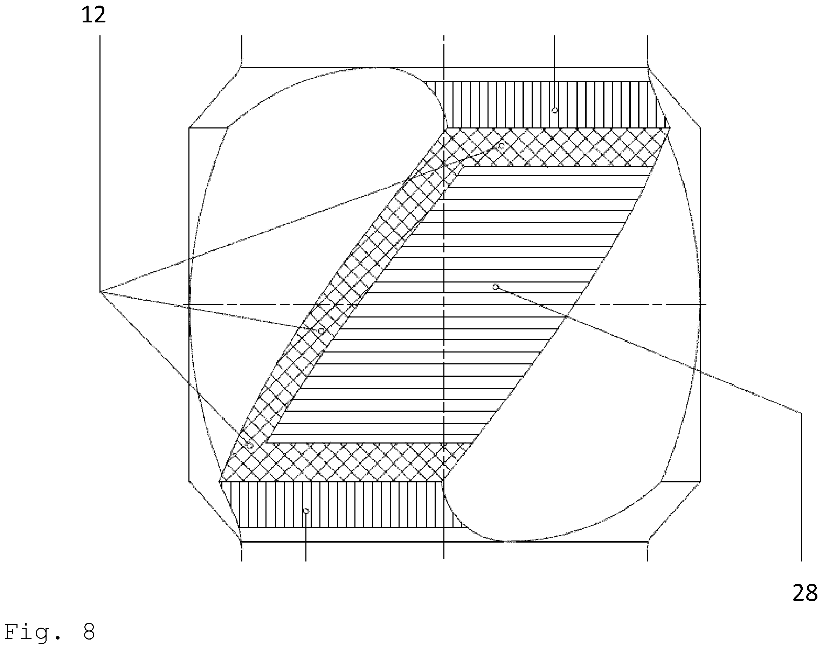

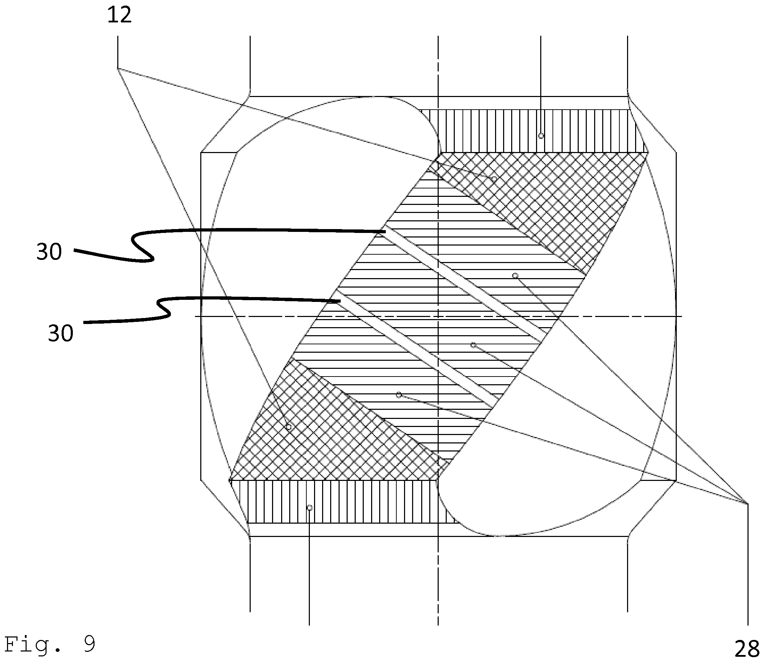

La figure 8 et la figure 9 montrent d'autres modes de réalisation du stabilisateur-aléseur selon l'invention. Dans ces modes de réalisation, les inserts diamantés résistants à l'usure mentionnés dans l'invention sont remplacés par un revêtement laser à diamant 28. La concentration en diamant dudit revêtement laser à diamant 28 est comprise entre 20 et 35% en volume, et la granulométrie du diamant est comprise entre 40/50 mesh ASTM et 120/140 mesh ASTM. Sur la figure 8, le revêtement laser à diamant 28 recouvre toute la surface de la partie résistante à l'usure du stabilisateur. Sur la figure 9, le revêtement laser à diamant 28 est disposé en bandes couvrant toute la largeur de la lame et alternant avec une bande d'acier 30 beaucoup plus mince, cette disposition permettant d'éviter la propagation de fissures dans le revêtement laser à diamant 28. Comme on peut le voir sur ces figures, les deux bords cylindriques du stabilisateur sont encore recouverts d'inserts diamantés de coupe 12 brasés dans des poches usinés dans la partie acier du stabilisateur.

Comme saura l'apprécier l'homme du métier, la présente invention ne se limite pas aux illustrations et aux explications particulières fournies ci-dessus. L'invention réside dans chacun des attributs caractéristiques novateurs et dans chacune des combinaisons d'attributs caractéristiques. Les repères numériques des revendications ne limitent en aucun cas la portée de leur protection. L'utilisation du verbe « comprendre » et de ses formes conjuguées n'exclut pas la présence d'éléments autres que ceux qui sont cités. L'utilisation de l'article « un » ou « une » avant un élément n'exclut pas la présence d'une pluralité de ces éléments.

La présente invention a été décrite par rapport à des modes de réalisation spécifiques qui sont des illustrations de l'invention et qui ne doivent pas être considérés comme limitant cette dernière.

## Revendications

1. Stabilisateur-aléseur pour train de forage comprenant sur sa surface externe un mélange d'inserts, le mélange comprenant des inserts de coupe et des inserts résistants à l'usure, **caractérisé en ce que**
- lesdits inserts de coupe et résistants à l'usure sont diamantés,
- les inserts diamantés résistants à l'usure (12) ont une granulométrie du diamant inférieure et une concentration en diamant supérieure à celles des inserts diamantés de coupe (10).

2. Stabilisateur-aléseur selon la revendication 1, **caractérisé en ce que** les inserts diamantés de coupe (10) ont une granulométrie du diamant comprise entre 18/20 et 40/50 mesh ASTM et une concentration en diamant comprise entre 10% et 35% en volume, et les inserts diamantés résistants à l'usure (12) ont une granulométrie du diamant comprise entre 40/50 et 120/140 mesh ASTM et une concentration en diamant comprise entre 35% et 60% en volume.

3. Stabilisateur-aléseur selon l'une quelconque des revendications précédentes, **caractérisé en ce que** la composition des inserts diamantés comprend au moins un métal et un carbure métallique choisi dans le groupe constitué du carbure de tungstène, du carbure de titane, du carbure de tantale, du carbure de chrome, du carbure de vanadium, du carbure de niobium et du carbure de molybdène.

4. Stabilisateur-aléseur selon l'une quelconque des revendications précédentes, **caractérisé en ce que** les inserts diamantés sont brasés sur le stabilisateur-aléseur.

5. Stabilisateur-aléseur selon l'une quelconque des revendications précédentes, **caractérisé en ce qu'**il comprend une partie cylindrique centrale (2) et deux parties coniques (4) de part et d'autre de ladite partie cylindrique centrale (2).

6. Stabilisateur-aléseur selon la revendication 5, **caractérisé en ce que** ladite partie cylindrique centrale (2) comprend des lames hélicoïdales (6).

7. Stabilisateur-aléseur selon l'une quelconque des revendications 5 et 6, **caractérisé en ce que** la partie cylindrique centrale (2) comprend un mélange d'inserts diamantés (14), le mélange comprenant des inserts diamantés de coupe (10) et des inserts diamantés résistants à l'usure (12).

8. Stabilisateur-aléseur selon l'une quelconque des revendications 6 ou 7, **caractérisé en ce que** les bords d'attaque et latéral des lames hélicoïdales (6) comprennent entre une et cinq rangées d'inserts diamantés de coupe (10) et la partie centrale des lames hélicoïdales (6) comprend des inserts diamantés résistants à l'usure (12).

9. Stabilisateur-aléseur selon l'une quelconque des revendications 5 à 8, **caractérisé en ce que** lesdites deux parties coniques (4) comprennent un mélange d'inserts diamantés (14), le mélange comprenant des inserts diamantés de coupe (10) et des inserts diamantés résistants à l'usure (12), la proportion des inserts de coupe étant supérieure à 50% du nombre total d'inserts dans ledit mélange d'inserts diamantés (14).

10. Stabilisateur-aléseur selon les revendications 6 à 9, **caractérisé en ce que** le stabilisateur-aléseur comprend des zones de transition cylindriques (26) entre les lames hélicoïdales (6) et les parties coniques (4), lesdites zones de transition cylindriques (26) comprenant entre deux rangées et cinq rangées d'inserts diamantés de coupe (10).

11. Stabilisateur-aléseur selon les revendications 5 à 10, **caractérisé en ce que** lesdites deux parties coniques (4) comprennent des inserts diamantés ayant une forme, un diamètre et une longueur adaptés pour former un angle de conicité (17) entre 5° et 25°.

12. Stabilisateur-aléseur selon les revendications 5 à 11, **caractérisé en ce que** la partie cylindrique centrale (2) comprend un revêtement laser à diamant (28), la concentration en diamant dudit revêtement laser à diamant (28) étant comprise entre 20 et 35% en volume, et la granulométrie du diamant étant comprise entre 40/50 mesh ASTM et 120/140 mesh ASTM.

13. Procédé pour améliorer les capacités de stabilisation d'un stabilisateur-aléseur selon l'une quelconque des revendications précédentes, **caractérisé en ce que** le coefficient de frottement entre le stabilisateur-aléseur et la paroi du trou de forage est modulé.

14. Procédé selon la revendication 13, **caractérisé en ce que** moduler le coefficient de frottement entre le stabilisateur-aléseur et la paroi du trou de forage consiste à faire varier la proportion d'inserts diamantés de coupe (10) et d'inserts diamantés résistants à l'usure (12) dans le mélange d'inserts diamantés (14) sur la partie centrale des lames hélicoïdales (6) du stabilisateur-aléseur.

15. Procédé selon la revendication 14, **caractérisé en ce que** la proportion d'inserts diamantés de coupe (10) dans le mélange d'inserts diamantés sur la partie centrale des lames hélicoïdales (6) du stabilisateur-aléseur varie entre 0% et 70% du nombre total d'inserts diamantés dans ledit mélange d'inserts diamantés (14).

## Patentansprüche

1. Erweiterungsstabilisator für einen Bohrstrang, umfassend auf seiner externen Oberfläche eine Zusammenstellung von Einsätzen, wobei die Zusammenstellung Schneideinsätze und verschleißfeste Einsätze umfasst, **dadurch gekennzeichnet, dass**
- die Schneideinsätze und verschleißfesten Einsätze Diamanteinsätze sind,
- die verschleißfesten Diamanteinsätze (12) eine Korngröße des Diamanten, die kleiner, und eine Diamantkonzentration, die größer als die der Diamantschneideinsätze (10) sind, aufweisen.

2. Erweiterungsstabilisator nach Anspruch 1, **dadurch gekennzeichnet, dass** die Diamantschneideinsätze (10) eine Korngröße des Diamanten, die zwischen 18/20 und 40/50 mesh ASTM liegt, und eine Diamantkonzentration, die zwischen 10 und 35 Volumenprozent liegt, aufweisen, und die verschleißfesten Diamanteinsätze (12) eine Korngröße des Diamanten, die zwischen 40/50 und 120/140 mesh ASTM liegt, und eine Diamantkonzentration, die zwischen 35 bis 60 Volumenprozent liegt, aufweisen.

3. Erweiterungsstabilisator nach einem der vorhergehenden Ansprüche, **dadurch gekennzeichnet, dass** die Zusammensetzung der Diamanteinsätze mindestens ein Metall und ein Metallkarbid, das aus der Gruppe ausgewählt wird, die aus Wolframkarbid, Titankarbid, Tantalkarbid, Chromkarbid, Vanadiumkarbid, Niobkarbid und Molybdänkarbid besteht, umfasst.

4. Erweiterungsstabilisator nach einem der vorhergehenden Ansprüche, **dadurch gekennzeichnet, dass** die Diamanteinsätze auf dem Erweiterungsstabilisator hartgelötet sind.

5. Erweiterungsstabilisator nach einem der vorhergehenden Ansprüche, **dadurch gekennzeichnet, dass** er einen mittleren zylindrischen Teil (2) und zwei kegelförmige Teile (4) auf beiden Seiten des mittleren zylindrischen Teils (2) umfasst.

6. Erweiterungsstabilisator nach Anspruch 5, **dadurch gekennzeichnet, dass** der mittlere zylindrische Teil (2) spiralförmige Blätter (6) umfasst.

7. Erweiterungsstabilisator nach einem der Ansprüche 5 und 6, **dadurch gekennzeichnet, dass** der mittlere zylindrische Teil (2) eine Zusammenstellung (14) von Diamanteinsätzen umfasst, wobei die Zusammenstellung Diamantschneideinsätze (10) und verschleißfeste Diamanteinsätze (12) umfasst.

8. Erweiterungsstabilisator nach einem der Ansprüche 6 oder 7, **dadurch gekennzeichnet, dass** die Leitkante und die Seitenkante der spiralförmigen Blätter (6) zwischen einer und fünf Reihen von Diamantschneideinsätzen (10) umfassen und der mittlere Teil der spiralförmigen Blätter (6) verschleißfeste Diamanteinsätze (12) umfasst.

9. Erweiterungsstabilisator nach einem der Ansprüche 5 bis 8, **dadurch gekennzeichnet, dass** die beiden kegelförmigen Teile (4) eine Zusammenstellung (14) von Diamanteinsätzen umfassen, wobei die Zusammenstellung Diamantschneideinsätze (10) und verschleißfeste Diamanteinsätze (12) umfasst, wobei die Proportion der Schneideinsätze größer als 50 % der Gesamtanzahl der Einsätze in der Zusammenstellung (14) von Diamanteinsätzen ist.

10. Erweiterungsstabilisator nach Anspruch 6 bis 9, **dadurch gekennzeichnet, dass** der Erweiterungsstabilisator zylindrische Übergangszonen (26) zwischen den spiralförmigen Blättern (6) und den kegelförmigen Teilen (4) umfasst, wobei die zylindrischen Übergangszonen (26) zwischen zwei Reihen und fünf Reihen von Diamantschneideinsätzen (10) umfassen.

11. Erweiterungsstabilisator nach Anspruch 5 bis 10, **dadurch gekennzeichnet, dass** die beiden kegelförmigen Teile (4) Diamanteinsätze umfassen, die eine Form, einen Durchmesser und eine Länge aufweisen, die geeignet sind, um einen Kegelwinkel (17) zwischen 5° und 25° zu bilden.

12. Erweiterungsstabilisator nach Anspruch 5 bis 11, **dadurch gekennzeichnet, dass** der mittlere zylindrische Teil (2) eine Diamantlaserbeschichtung (28) umfasst, wobei die Diamantkonzentration der Diamantlaserbeschichtung (28) zwischen 20 und 35 Volumenprozent liegt, und die Körnung des Diamanten zwischen 40/50 mesh ASTM und 120/140 mesh ASTM liegt.

13. Verfahren zum Verbessern der Stabilisierungsfähigkeiten eines Erweiterungsstabilisators nach einem der vorhergehenden Ansprüche, **dadurch gekennzeichnet, dass** der Reibungskoeffizient zwischen dem Erweiterungsstabilisator und der Wand des Bohrlochs moduliert wird.

14. Verfahren nach Anspruch 13, **dadurch gekennzeichnet, dass** das Modulieren des Reibungskoeffizienten zwischen dem Erweiterungsstabilisator und der Wand des Bohrlochs darin besteht, die Proportion der Diamantschneideinsätze (10) und der verschleißfesten Diamanteinsätze (12) in der Zusammenstellung (14) von Diamanteinsätzen auf dem mittleren Teil der spiralförmigen Blätter (6) des Erweiterungsstabilisators zu variieren.

15. Verfahren nach Anspruch 14, **dadurch gekennzeichnet, dass** die Proportion der Diamantschneideinsätze (10) in der Zusammenstellung von Diamanteinsätzen auf dem mittleren Teil der spiralförmigen Blätter (6) des Erweiterungsstabilisators zwischen 0 % und 70 % der Gesamtanzahl von Diamanteinsätzen in der Zusammenstellung aus Diamanteinsätzen (14) variiert.

## Claims

1. Stabilizer-reamer for drill string comprising on its outer surface a mixture of inserts, the mixture comprising cutting inserts and wear resistant inserts, **characterized in that**
- said cutting inserts and wear resistant inserts are diamond impregnated,
- said wear resistant diamond impregnated inserts have smaller diamond grain size and higher diamond concentration than said cutting diamond impregnated inserts.

2. Stabilizer-reamer according to claim 1 **characterized in that** cutting diamond impregnated inserts (10) have a diamond grit size comprised between 18/20 and 40/50 mesh ASTM and a diamond concentration comprised between 10% and 35% in volume, and wear resistant diamond impregnated inserts (12) have a diamond grit size comprised between 40/50 and 120/140 mesh ASTM and a diamond concentration comprised between 35% and 60% in volume.

3. Stabilizer-reamer according to anyone of the preceding claims, **characterized in that** the composition of the diamond impregnated inserts comprises at least one metal and one metallic carbide selected from the group consisting of tungsten carbide, titanium carbide, tantalum carbide, chromium carbide, vanadium carbide, niobium carbide and molybdenum carbide.

4. Stabilizer-reamer according to anyone of the preceding claims **characterized in that** the diamond impregnated inserts are brazed on the stabilizer-reamer.

5. Stabilizer-reamer according to anyone of the preceding claims, **characterized in that** it comprises a central cylindrical portion (2) and two tapered portions (4) on either side of said central cylindrical portion (2).

6. Stabilizer-reamer according to claim 5 **characterized in that** said central cylindrical portion (2) comprises helical blades (6).

7. Stabilizer-reamer according to anyone of claims 5 and 6 **characterized in that** the central cylindrical portion (2) comprises a mixture of diamond impregnated inserts, the mixture comprising cutting diamond impregnated inserts (10) and wear resistant diamond impregnated inserts (12).

8. Stabilizer-reamer according to anyone of claims 6 or 7, **characterized in that** the leading and lateral edges of the helical blades comprise between one and five rows of cutting diamond impregnated inserts (10) and the central part of the helical blades (6) comprises wear resistant diamond impregnated inserts (12).

9. Stabilizer-reamer according to anyone of claims 5 to 8 **characterized in that** said two tapered portions (4) comprise a mixture of diamond impregnated inserts (14), the mixture comprising cutting diamond impregnated inserts and wear resistant diamond impregnated inserts, the ratio of cutting inserts being above 50% of the total number of inserts in said mixture of diamond impregnated inserts (14) .

10. Stabilizer-reamer according to claims 6 to 9, **characterized in that** the stabilizer-reamer comprises cylindrical transition zones (26) between the helical blades (6) and the tapered parts (4), said cylindrical transition zones (26) comprising between two rows and five rows of cutting diamond impregnated inserts (10).

11. Stabilizer-reamer according to claim 5 to 10 **characterized in that** said two tapered portions comprise diamond impregnated inserts having a shape, diameter and length adapted to form a tapered angle (17) between 5° and 25°.

12. Stabilizer-reamer according to claims 5 to 11 **characterized in that** the central cylindrical portion (2) comprises a diamond laser cladding (28), the diamond concentration of said diamond laser cladding (28) being comprised between 20 and 35 % in volume, and the diamond grit size being comprised between 40/50 mesh ASTM and 120/140 mesh ASTM.

13. Method to improve the stabilizing capabilities of a stabilizer-reamer according to anyone of the preceding claims, **characterized in that** the friction coefficient between the stabilizer-reamer and borehole wall is modulated.

14. Method according to claim 13 **characterized in that** modulating the friction coefficient between the stabilizer-reamer and borehole wall consist in varying the ratio of cutting diamond impregnated inserts (10) and wear resistant diamond impregnated inserts (12) in the mixture of diamond impregnated inserts on the central part of the helical blades of the stabilizer-reamer.

15. Method according to claim 14 **characterized in that** the ratio of cutting diamond impregnated inserts (10) and wear resistant diamond impregnated inserts (12) in the mixture of diamond impregnated inserts on the central part of the helical blades (6) of the stabilizer-reamer is varied between 0% and 70% of the total number of diamond impregnated inserts in said mixture of diamond impregnated inserts (14).
